# EUROPEAN PATENT SPECIFICATION

(11) **EP 1 802 689 B1**
(45) Date of publication and mention of the grant of the patent: **28.03.2012**
(21) Application number: 05803145.1
(22) Date of filing: 11.10.2005
(51) Int. Cl.: C08J 9/14, C08J 9/00, C08K 5/02

(54) **BLOWING AGENT COMPOSITION AND POLYISOCYANATE-BASED FOAM PRODUCED THEREWITH**
TREIBMITTELZUSAMMENSETZUNG UND DAMIT HERGESTELLTER SCHAUM AUF POLYISOCYANATBASIS
FORMULE D' UN AGENT D' EXPANSION ET MOUSSE POLYISOCYANATE FABRIQUÉE À L' AIDE DUDIT AGENT

(30) Priority: 12.10.2004 US 617807 P
(43) Date of publication of application: 04.07.2007
(73) Proprietor: Dow Global Technologies LLC, Midland, MI 48674 (US)
(72) Inventor: SNIDER, David, E., Canton, GA 30115 (US)
(74) Representative: Raynor, John
(86) International application number: PCT/US2005/036334
(87) International publication number: WO 2006/044304

(56) References cited:
- EP-A- 0 882 760
- WO-A-2004/110621
- US-A1- 2003 045 593
- US-A1- 2004 097 604

## Description

The present invention relates to a blowing agent composition comprising pentafluoropropane (HFC-245fa) and tetrafluoroethane (HFC-134a) and its use in preparing a polyisocyanate-based foam having a reduced potential for emission of smoke during any subsequent combustion.

Polyisocyanate-based foam is generally understood to mean polyurethane foam or polyisocyanurate foam prepared by the reaction of a polyisocyanate with a polyol in the presence of a blowing agent. A high molar excess of polyisocyanate to polyol will give predominantly polyisocyanurate foam. Both types of foam, when of a rigid and hard nature have physical properties making them eminently suitable for building and construction purposes. Foam suitable for such building and construction purposes frequently must additionally comply with local and national codes pertaining to combustion behaviour; foam with high burn rates or excessive flame spread/propagation generally will not give compliance with such codes.

When foam bums one of the combustion products is observed as smoke. The emission of smoke, especially in a confined space, can be a hazard to individuals who may be trying to exit from a burning structure and to incoming rescue crews. Consequently there is concern about the amount of smoke being emitted during combustion of foam and a growing demand to develop technologies which cater towards a reduced potential for smoke emission. As part of our on-going studies for polyisocyanate-based foam and endeavouring to address such needs for new and improved technology, recent efforts have focused in particular on the blowing agents 1,1,1,3,3-pentafluoropropane (HFC 245fa) and 1,1,1,2-tetrafluoroethane (HFC 134a) and more specifically use of these substances in combination when preparing a polyisocyanate-based foam. The use of HFC 245fa and HFC 134a as blowing agent is well known in the art; however; their use in combination is confined to a few specific teachings as exemplified below.

U.S. Patent 6,043,291 (equivalent to EP-A-882760) teaches the use of a blowing agent mixture for manufacture of rigid polyurethane foam which includes from 20 to 99 parts by weight of HFC-245fa and from 1 to 80 parts by weight of HFC-134a and up to 50 wt percent (based on total blowing agent) of other fluorocarbon or HFC blowing agent, or from 1 to 20 wt percent (based on total blowing agent) of a hydrocarbon blowing agent. U.S. Patent 6,043,291 is silent with respect to smoke emission of combusted foam prepared in the presence of such blowing agent.

U.S. Patent application 20040097604 discloses rigid foams with improved insulation properties obtained from reaction of a polyisocyanate with an isocyanate-reactive material in the presence of a blowing agent mixture composed of from 5 to 50 parts by weight of HFC-134a and from 50 to 95 parts by weight of HFC-245fa. The select blowing agent composition, rich in the HFC-245fa component, is reported as being beneficial to formation of a fine cell size and consequentially improved insulation properties. The document is silent with respect to smoke emission of combusted foam prepared in the presence of such blowing agent.

It has been discovered that use of a select combination of 1,1,1,3,3-pentafluoropropane and 1,1,1,2-tetrafluoroethane as blowing agent for polyisocyanate-based foam is observed to provide for a desirable reduction in smoke emissions of such combusted polyisocyanate-based foam.

This invention relates to the use for reducing the smoke emission of a polyisocyanate-based foam prepared by reacting an organic polyisocyanate with an isocyanate reactive compound in the presence of a blowing agent mixture, of a blowing agent composition comprising 1,1,1,2-tetrafluoroethane (134a) in an amount of from 50 to 95 parts per 100 parts by weight of the blowing agent composition and 1,1,1,3,3-pentafluoropropane (245fa) in an amount of from 5 to 50 parts per 100 parts by weight of the blowing agent composition.

The physical blowing agents useful in the present invention include 1,1,1,3,3-pentafluoropropane (HFC-245fa) and 1,1,1,2-tetrafluoroethane (HFC-134a). Each of these individual blowing agents is well known to those skilled in the art and is commercially available.

The physical blowing agent composition pertinent to the disclosed invention herein comprises from 50 to 95 parts be weight 1,1,1,2-tetrafluoroethane (HFC 134a) and from 5 to 50 parts by weight of 1,1,1, 3,3-pentafluoropropane (HFC 245fa) based on total weight of the blowing agent composition. In a preferred embodiment the 1,1,1,2-tetrafluoroethane (134a) is present in from 55 parts to 90, and more preferably from 60 to 90 parts by weight; while the 1,1,1,3,3-pentafluoropropane is present in from 10 to 45 parts, and more preferably from 10 to 40 parts by weight. A minor amount (that is, less than 10 percent by weight, based on total weight of blowing agent mixture) of any of the other known physical blowing agents may optionally be included in the blowing agent mixture of the present invention. Other physical blowing agents include hydrocarbons such as alkanes and alkenes including butane, n-pentane, i-pentane, cyclopentane, hexane, cyclohexane and such like; their alkene analogues; halocarbon molecules such as hydrofluoroalkanes exemplified by pentafluorobutane (HFC-365mfc) or chlorocarbons such as 1 ,2-dichloroethylene. Non traditional blowing agents known in the preparation of polyurethane foam such as, for example, formic acid or methyl formate may also be present in such minor amounts. In a highly preferred embodiment of this invention, the physically blowing agent consists essentially of HFC-134a and HFC-245fa in the above stated amounts. Use of a blowing composition comprising HFC-134a in greater amounts than mentioned above is not desirable as it provides a frothing system; the present invention is intended as a non-frothing system which facilitates processing and simplifies equipment needs.

As is known in the art, rigid polyisocyanate-based foams are prepared by reacting polyisocyanates with isocyanate-reactive compounds in the presence of a physical blowing agent. Further descriptions of suitable reactants and processes are described hereinafter.

Any of the known organic polyisocyanates may be used in the present invention. Suitable polyisocyanates include aromatic, aliphatic and cycloaliphatic polyisocyanates and combinations thereof. Representative of these types are diisocyanates such as m-phenylene diisocyanate, p-phenylene diisocyanate, 2,4-toluene diisocyanate, 2,6-toluene diisocyanate, 1,6-hexamethylene diisocyanate, 1,4-hexamethylene diisocyanate, 1,4-cyclohexane diisocyanate, the isomers of hexahydrotoluene diisocyanate, 1,5-naphthylene diisocyanate, 1-methylphenyl-2,4-phenyl diisocyanate, 4,4'-diphenylmethane diisocyanate, 2,4'-diphenylmethane diisocyanate, 4,4'-biphenylene diisocyanate, 3,3'-dimethoxy-4,4'-biphenylene diisocyanate, and 3,3'-dimethyldiphenylpropane-4,4'-diisocyanate; triisocyanates such as 2,4,6-toluene triisocyanate; and polyisocyanates such as 4,4'-dimethyl-diphenylmethane-2,2',5,5'-tetraisocyanate and the polymethylene polyphenylisocyanates. A crude polyisocyanate may also be used in making polyurethanes, such as the crude toluene diisocyanate obtained by the phosgenation of a mixture of toluene diamines. Preferred undistilled or crude toluene polyisocyanates are disclosed in U.S. Pat. No. 3,215,652. Similarly, undistilled polyisocyantates, such as methylene bridged polyphenylpolyisocyanates are useful in the present invention and are obtained by the phosgenation of polyphenylpolymethylenepolyamines obtained by the known process of the condensation of aromatic amines such as aniline with formaldehyde. Suitable modified diisocyanates or polyisocyanates may be obtained by chemical reaction of diisocyanates and/or polyisocyanates. Modified isocyanates useful in the practice of the present invention include isocyanates containing ester groups, urea groups, biuret groups, allophanate groups, carbodiimide groups, isocyanurate groups, uretdione groups and/or urethane groups. For the present invention, the more preferred polyisocyanates due to their ability to cross-link the polymer and provide a rigid foam are the methylene-bridged polyphenyl polyisocyanates and prepolymers of methylene-bridged polyphenyl polyisocyanates, having an average functionality of from 2.0 to 3.5, preferably 2.5 to 3.2 isocyanate moieties per molecule and an NCO content of from 28 to 34 percent by weight.

Any of the known isocyanate reactive organic compounds may be used to produce foams in accordance with the present invention. Such isocyanate reactive compounds typically are substances bearing hydroxyl, amine, thiol or acid moieties capable of reacting with isocyanate functionality. When the reactive moiety is a hydroxyl group, the isocyanate reactive compound is typically referred to as being a "polyol". Suitable polyols may be prepared by reacting one or more suitable initiators containing active hydrogens with alkylene oxide. Suitable initiators are those containing at least 2 active hydrogens or combinations of initiators where the mole average of active hydrogens is at least 3, preferably from 3 to 8, and more preferably from 3.5 to 6. Active hydrogens are defined as those hydrogens which are observed in the well-known Zerewitinoff test, see Kohler, Journal of the American Chemical Society, p. 3181, Vol. 49 (1927). Representative of such active hydrogen-containing groups include -OH, -COOH, -SH and -NHR where R is H or alkyl, aryl aromatic group and the like.

Examples of suitable initiators include pentaerythritol, carbohydrate compounds such as lactose, alpha.-methylglucoside, alpha-hydroxyethyl-glucoside, hexitol, heptitol, sorbitol, dextrose, mannitol, sucrose and the like. Examples of suitable aromatic initiators containing at least four active hydrogens include aromatic amines such as toluene diamine, preferably, ortho-toluene diamine and methane diphenylamine, the reaction product of a phenol with formaldehyde, and the reaction product of a phenol with formaldehyde and a dialkanolamine such as described by U.S. Pat. Nos. 3,297,597; 4,137,265 and 4,383,102 (incorporated herein by reference). Other suitable initiators which may be used in combination with the initiators containing at least four active hydrogens include water, glycols, glycerine, trimethylolpropane, hexane triol, aminoethyl piperazine and the like. These initiators contain less than four active hydrogens and therefore can only be employed in quantities such that the total mole average of active hydrogens per molecule remains at least about 3.0. More preferred initiators for the preparation of the high functionality, high molecular weight polyols comprise sucrose, dextrose, sorbitol, .alpha.-methylglucoside, alpha.-hydroxy-ethylglucoside and toluene diamine that may be employed separately or in combination, or with other initiators such as glycerine, propylene glycol, or water.

The polyols may be prepared by methods well known in the art such as taught by Wurtz, The Encyclopaedia of Chemical Technology, Vol. 7, p. 257-266, Interscience Publishers Inc. (1951) and U.S. Pat. No. 1,922,459 involving the reaction of an initiator with C2-C4 alkylene oxides but including notably ethylene oxide and propylene.

Polyols suitable for the preparation of rigid foam and generally preferred for the present invention include those having from 2 to 8 active hydrogen atoms per molecule and having a hydroxyl number from 50 to 800, preferably from 100 to 650, more preferably from 200 to 500. The hydroxyl number range of from 200 to 800 corresponds to an equivalent weight range of 280 to 70. Use of polyol with a hydroxyl number below 50 is generally not conducive to obtaining good quality rigid foam unless such polyol is limited to being present in very minor amounts.

In the interest of procuring enhanced thermal insulation and diminished combustion properties of the resulting foam it is advantageous to select one or more polyols which as consequence of their initiator have an aromatic content. According aromatic polyester polyols such as commercially available under the product names Terate (available from KoSa), Stepanpol (available from Stepan Chemical Corporation) and Multranol (available from Bayer Corporation). Aromatic polyether polyol such as based on toluene diamine (TDA), Novolak, or Mannich initiators are also particularly suitable in the present invention. In one preferred embodiment, the polyol used contains an aromatic-initiated polyol in from 10 to 80, preferably from 20 to 80 and more preferably from 30 to 70 parts per 100 parts by total weight of the polyol composition. TDA-initiated polyols having an oxyethylene content may also be used to help diminish potential for smoke emission of the resulting foam.

Other components useful in producing the polyurethanes of the present invention include catalysts, surfactants, pigments, colorants, fillers, antioxidants, flame retardants, stabilizers, and the like.

When preparing polyisocyanate-based foams, it is generally advantageous to employ a minor amount of a surfactant to stabilize the foaming reaction mixture until it obtains rigidity. Such surfactants advantageously comprise a liquid or solid organosilicon compound. Other, less preferred surfactants include polyethylene glycol ethers of long chain alcohols, tertiary amine or alkanolamine salts of long chain alkyl acid sulfate esters, alkylsulfonic esters and alkylarylsulfonic acids. Such surfactants are employed in amounts sufficient to stabilize the foaming reaction mixture against collapse and the formation of large and uneven cells. Typically, 0.2 to 5.0 parts by weight of the surfactant per 100 parts polyol composition are sufficient for this purpose.

One or more catalysts are advantageously used. Any suitable urethane catalyst may be used including the known tertiary amine compounds and organometallic compounds. Examples of suitable tertiary amine catalysts include triethylenediamine, N-methylmorpholine, pentamethyl diethylenetriamine, dimethylcyclohexylamine, tetramethylethylenediamine, 1-methyl-4-dimethylaminoethyl-piperazine, 3-methoxy-N-dimethyl-propylamine, N-ethylmorpholine, diethylethanolamine, N-cocomorpholine, N,N-dimethyl-N', N'-dimethylisopropyl-propylene diamine, N,N-diethyl-3-diethyl aminopropylamine and dimethyl-benzyl amine. Examples of suitable organometallic catalysts include organomercury, organolead, organoferric and organotin catalysts, with organotin catalysts being preferred. Suitable organotin catalysts include tin salts of carboxylic acids such as dibutyltin di-2-ethyl hexanoate and dibutyltin dilaurate. Metal salts such as stannous chloride can also function as catalysts for the urethane reaction. A catalyst for the trimerization of polyisocyanates, such as an alkali metal alkoxide or carboxylate, or certain tertiary amines may also optionally be employed herein. Such catalysts are used in an amount, which measurably increases the rate of reaction of the polyisocyanate. Typical amounts are 0.01 to 3 part oftrimerization catalyst per 100 parts by weight of polyol. 1. Examples of such catalysts include the potassium salts of carboxylic acids such as potassium octoate, and the tertiary amine N,N',N"-tris(3-dimethylaminopropyl) hexahydro-s-triazine.

When preparing foam according to this invention, the amount of physical blowing mixture present is dependent on the desired density of the foam. Typically, the blowing agent mixture of the present invention is generally included in the foam-forming mixture in an amount of from 5 to 25 percent by weight, preferably from 7 to 20 percent by weight, based on the total weight of the foam- forming mixture. By foam-forming mixture it is understand the polyisocyanate(s), polyol(s), catalyst, surfactant and other adjuvant as may be present.

To assist in processing and provide supplemental blowing when preparing the foam, water may also present. If used, water is generally included in an amount of up to 3 percent by weight, preferably from 0.2 to 2.0 percent by weight, based on the total weight of the foam-forming mixture. Amounts in the low end of this range are favoured when intending to prepare a polyisocyanurate foam.

The above described reactants may be employed to produce rigid polyurethane and polyurethane-modified isocyanurate foam in a one-step process by reacting all of the ingredients together at once, or by the so-called "quasi prepolymer" method. In the one-step process the active hydrogen containing compounds, catalyst, surfactants, blowing agents and optional additives may be introduced separately to the mixing head where they are combined with the polyisocyanate to give the polyurethane- forming mixture. The mixture may be poured or injected into a suitable container or molded as required. For use of machines with a limited number of component lines into the mixing head, a premix of all the components except the polyisocyanate can be advantageously employed. This simplifies the metering and mixing of the reacting components at the time the polyurethane-forming mixture is prepared.

Alternatively, the foams may be prepared by the so-called "quasi prepolymer" method. In this method a portion of the polyol component is reacted in the absence of catalysts with the polyisocyanate component in proportion so as to react from 10 percent to 30 percent of free isocyanate groups based on the polyisocyanate. To prepare foam, the remaining portion of the polyol is added and the components are allowed to react together in the presence of catalysts and other appropriate additives such as blowing agent, surfactant, etc. Other additives may be added to either the isocyanate prepolymer or remaining polyol or both prior to the mixing of the components, whereby at the end of the reaction a rigid polyurethane foam is provided.

When intending to prepare polyurethane foam the amount of isocyanate reacted with isocyanate reactive composition is such to provide an isocyanate index of from 80 to 180, preferably from 90 to 150. When intending to prepare polyisocyanurate foam the amount of isocyanate reacted with isocyanate reactive composition is such to provide an isocyanate index of above 180, preferably from 250 to 600. An isocyanate index of 100 corresponds to a reaction stoichiometry where one equivalent of isocyanate is reacted with one equivalent of the isocyanate-reactive composition, including water as might be present.

As noted above, this invention also pertains to a composition, or premix, comprising as the polyol component, one or more polyether or polyester polyols; and a blowing agent being the select combination of HFC-134a and HFC-245fa earlier defined. Such polyol composition, based on combined weight of polyol and blowing agent, comprises the polyol component in an amount of from 70 to 98, preferably from 75 to 90 weight percent. Commensurately the blowing agent is present in an amount of from 2 to 30, and preferably from 10 to 25 weight percent.

In the alternative such premix can be a composition comprising a polyisocyanate and a blowing agent being the select combination of HFC- 134a and HFC-245fa earlier defined. Such polyisocyanate composition, based on combined weight of polyisocyanate and blowing agent, comprises the polyisocyanate component in an amount of from 70 to 98, preferably from 75 to 90 weight percent. Commensurately the blowing agent is present in an amount of from 2 to 30, and preferably from 10 to 25 weight percent.

The polyisocyanate-based foams of this invention are useful in a wide range of applications. Accordingly, not only can rigid appliance insulating foam be prepared but also spray insulation, rigid insulating board stock, laminates and many other types of rigid foam can easily be prepared according to this invention.

The foam obtained in accordance to this invention can be characterized by a reduced potential for emission of smoke when subjected to bum conditions in a controlled test environment. Suitable procedures for determining the amount of smoke emission include Test Procedure ASTM E-84 or UL 723 from the Underwriters Laboratory. In this procedure, the amount of smoke generated on burning of a panel having a thickness of six inches is observed. It is well known that extent of smoke emissions between polyurethane foam and polyisocyanurate foam differs. In the case of polyurethane foam prepared according to this invention, the foam can be characterized by a smoke emission index (sometimes referred to as smoke development index) of less than 300, and more typically less than about 250. A lower number signifies less smoke production and emission.

The following examples are given to illustrate the invention and should not be interpreted as limiting it in any way. Unless stated otherwise, all parts and percentages are by weight.

### Examples 1

The following polyurethane foams are prepared with reactants as noted below.

The foams are prepared using a high pressure impingement mixing equipment with the polyisocyanate and polyol composition at a temperature of 72°F and 67°F respectfully. Molded foam is prepared and its physical properties reported below

| Polyol Composition (pbw) | Foam 1 | Foam A* | Foam B* |
|---|---|---|---|
| Polyol A | 42.8 | 42.8 | 42.7 |
| Polyol B | 8.3 | 8.3 | 8.5 |
| Polyol C | 18.3 | 18.3 | 18.6 |
| FR additive | 13 | 13 | 13 |
| Water | 2.16 | 2.16 | 2.16 |
| Surfactant | 1.3 | 1.3 | 1.3 |
| Catalyst | 2.72 | 2.72 | 2.72 |
| BA: 245fa | 5.7 | 11.4 | 0 |
| BA: 134a | 5.7 | 0 | 10.04 |
| | | | |
| Polyisocyanate A at Isocyanate Index of: | 100 | 100 | 100 |
| Gel time (seconds) | 62 | 69 | 60 |
| | | | |
| Foam density: lbs/ft³ | | | |
| free-rise | 1.65 | 1.69 | 1.67 |
| molded | 2.3 | 2.3 | 2.35 |
| K-factor | 0.155 | 0.148 | 0.165 |
| Compressive Strength (psi) (parallel to rise) | 16 | 19.9 | 17 |
| UL 723 Test Procedure: | | | |
| Flame spread | 20 | 20 | 20 |
| Smoke Emission Index | 250 | 400 | 185 |

| | | | |
|---|---|---|---|
| Polyol A: TERATE 2031, an aromatic polyester polyol available from Invista. Polyol B: PHT-4 diol, a brominated polyol available from the Great Lakes Chemical Company Polyol C: VORANOL 360, a sucrose-glycerine initiated polyol, available from The Dow Chemical Company | | | |

FR Additive: ANTIBLAZE 80, a proprietary fire retardant available from Albright & Wilson
Surfactant: DABCO DC-193 available from Air Products
Catalyst: a blend of the following:
- DABCO TMR-4 available from Air Products
- DESMO Rapid DB available from Rhine Chemie
- POLYCAT 8 available from Air Products
- ERL-4221 available from Union Carbide Corporation
BA 245fa 1,1,1,3,3- pentafluoropropane
BA 134a 1,1,1,2-tetrafluoroethane
Polyisocyanate A - a polymethylene polyphenylisocyanate available from The Dow Chemical Company; average functionality 2.7; equivalent weight 131.

The compressive strength is measured using test method ASTM D-1621.

Foam 1 exhibits similar physical properties and a significantly lower smoke emission index relative to Comparative Foam A. Comparative Foam B prepared in the presence of a blowing agent consisting of only HFC 134a; exhibits a lower smoke emission index. However use of HFC 134a as the sole blowing agent provides a frothing system. Combinations of HFC-245fa and HFC 134a reduces the frothing, essentially providing for a non- or low frothing system and facilitate processing on conventional equipment and molds.

## Claims

1. The use for reducing the smoke emission of a polyisocyanate-based foam prepared by reacting an organic polyisocyanate with an isocyanate reactive compound in the presence of a blowing agent mixture, of a blowing agent composition comprising
a) 1,1,1,2-tetrafluoroethane (134a) in an amount of from 50 to 95 parts per 100 parts by weight of the blowing agent composition, and
b) 1,1,1,3,3-pentafluoropropane (245fa) in an amount of from 5 to 50 parts per 100 parts by weight of the blowing agent composition.

2. The use according to Claim 1 wherein the blowing agent composition comprises from 55 to 90 parts be weight 1,1,1,2-tetrafluoroethane (134a) and from 10 to 45 parts by weight of 1,1,1,3,3- pentafluoropropane (245fa).

3. The use according to claim 1 or claim 2 wherein up to 3 percent by weight, based on the total weight of foam-forming mixture, of water is present.

4. The use according to any one of the preceding claims, wherein the polyisocyanate is a polymethylene polyphenyl polyisocyanate.

5. The use according to any one of the preceding claims wherein the isocyanate reactive compound is a polyol or polyol mixture having an hydroxyl number of from 200 to 800 mg KOH/g.

6. The use according to any one of the preceding claims wherein the foam product exhibits a smoke emission index of less than 250 as measured according to test procedure UL 723.

## Patentansprüche

1. Verwendung einer Treibmittelzusammensetzung zur Verringerung der Rauchemission eines polyisocyanatbasierten Schaumstoffs, der hergestellt wird durch Umsetzen eines organischen Polyisocyanats mit einer mit Isocyanat reaktiven Verbindung in Gegenwart einer Treibmittelmischung, wobei die Treibmittelzusammensetzung Folgendes umfasst:
a) 1,1,1,2-Tetrafluorethan (134a) in einer Menge von 50 bis 95 Teilen pro 100 Gewichtsteile der Treibmittelzusammensetzung, und
b) 1,1,1,3,3-Pentafluorpropan (245fa) in einer Menge von 5 bis 50 Teilen pro 100 Gewichtsteile der Treibmittelzusammensetzung.

2. Verwendung nach Anspruch 1, wobei die Treibmittelzusammensetzung von 55 bis 90 Gewichtsteile 1,1,1,2-Tetrafluorethan (134a) und von 10 bis 45 Gewichtsteile 1,1,1,3,3-Pentafluorpropan (245fa) umfasst.

3. Verwendung nach Anspruch 1 oder Anspruch 2, wobei bis zu 3 Gew.-% Wasser, bezogen auf das Gesamtgewicht der schaumbildenden Mischung, vorhanden ist.

4. Verwendung nach einem der vorhergehenden Ansprüche, wobei das Polyisocyanat ein Polymethylenpolyphenylpolyisocyanat ist.

5. Verwendung nach einem der vorhergehenden Ansprüche, wobei die mit Isocyanat reaktive Verbindung ein Polyol oder eine Polyolmischung mit einer Hydroxylzahl von 200 bis 800 mg KOH/g ist.

6. Verwendung nach einem der vorhergehenden Ansprüche, wobei das Schaumstoffprodukt einen Rauchemissionsindex kleiner als 250 zeigt, gemessen nach dem Testverfahren UL 723.

## Revendications

1. Utilisation, pour réduire les quantités de fumée émises par une mousse à base de polyisocyanate, préparée par réaction d'un polyisocyanate organique avec un composé réactif vis-à-vis des isocyanates en présence d'un mélange d'agents d'expansion, d'une composition d'agents d'expansion comprenant :
a) du 1,1,1,2-tétrafluoroéthane (134a), en une quantité de 50 à 95 parties en poids pour 100 parties en poids de la composition d'agents d'expansion,
b) et du 1,1,1,3,3-pentafluoropropane (245fa), en une quantité de 5 à 50 parties en poids pour 100 parties en poids de la composition d'agents d'expansion.

2. Utilisation conforme à la revendication 1, pour laquelle la composition d'agents d'expansion comprend de 55 à 90 parties en poids de 1,1,1,2-tétrafluoroéthane (134a) et de 10 à 45 parties en poids de 1,1,1,3,3-pentaflu oropropane (245fa).

3. Utilisation conforme à la revendication 1 ou 2, dans laquelle de l'eau est présente en une quantité qui peut représenter jusqu'à 3 % du poids total du mélange donnant une mousse.

4. Utilisation conforme à l'une des revendications précédentes, pour laquelle le polyisocyanate est un polyméthylène-polyphényl-polyisocyanate.

5. Utilisation conforme à l'une des revendications précédentes, pour laquelle le composé réactif vis-à-vis des isocyanates est un polyol ou un mélange de polyols, qui présente un indice d'hydroxyle de 200 à 800 mg de KOH par gramme.

6. Utilisation conforme à l'une des revendications précédentes, à la suite de laquelle la mousse produite présente un indice d'émission de fumées, mesuré selon le protocole d'essai UL 723, inférieur à 250.
